# EUROPEAN PATENT SPECIFICATION

(11) **EP 1 036 508 B1**
(45) Date of publication and mention of the grant of the patent: **02.02.2005**
(21) Application number: 99200802.9
(22) Date of filing: 16.03.1999
(51) Int. Cl.: A23L 1/16, A23P 1/10, A21C 11/00

(54) **Injection moulded pasta and process for making them**
Spritzgiessteigware und Verfahren ihrer Herstellung
Pâtes alimentaires obtenues par injection-moulage et procédé de fabrication

(43) Date of publication of application: 20.09.2000
(73) Proprietor: SOCIETE DES PRODUITS NESTLE S.A., 1800 Vevey (CH)
(72) Inventor: Panattoni, Lorenzo, 8408 Winterthur (CH); Odermatt, Robert Gerlad, 8500 Frauenfeld (CH); Halden, Jonas Peter, 8472 Seuzach (CH)
(74) Representative: Thomas, Alain

(56) References cited:
- WO-A-93/25089
- WO-A-95/31907
- DE-A- 4 230 040
- US-A- 5 279 658
- PATENT ABSTRACTS OF JAPAN vol. 016, no. 128 (C-0924), 2 April 1992 (1992-04-02) & JP 03 292868 A (SHIGETOSHI SUZUKI;OTHERS: 01), 24 December 1991 (1991-12-24)

## Description

The present invention relates to a pasta product and to a process for the manufacture of a pasta product.

US4076846 discloses an edible moulding composition mainly comprising a starch, sodium caseinate, glycerol and an emulsifier, which may be used for manufacturing biodegradable packaging films or containers, by extrusion or injection moulding.

US5279658 discloses the preparation of bio-degradable shaped articles such as containers, boxes, cups, plates, trays and straws comprising injecting an extruded composition into a molding press. The injector is maintained at e.g. a temperature of 258-287°F (125.5-141.7°C) and a pressure of 5000 psi (344 bar).

US4886440 discloses an injection moulding apparatus and process for the manufacture of food or pet food products having tridimensional shapes such as a bone shape for dogs or fish shape for cats, from a mixture of meat meal and wheat flour.

W09325089 discloses a process for preparing a tridimensional pasta product by injection moulding.

A first object of the present invention is to provide a tridimensional pasta product having good organoleptical properties which may be compared with those of traditional pasta products.

A second object of the present invention is to provide a process for manufacturing a tridimensional pasta product having good organoleptical properties which may be compared with those of traditional pasta products.

The pasta product according to the present invention is an injection moulded pasta product.

The process for manufacturing a pasta product is as defined in the claims. The present pasta product may be made of a starting raw material mixture which comprises a cereal flour or semolina, for example.

The cereal may be Durum or hard wheat, rice and/or corn, for example.

The pasta product may be made of a starting raw material mixture which further comprises additives consisting of wheat protein, especially gliadin enriched wheat protein, soft wheat flour, egg material, sodium chloride and/or spices, for example.

The pasta product may have a gelatinization degree of from 0 to 100%.

The pasta product may have a water content of from 4 to 32%, for example.

As stated above, the present process for manufacturing a pasta product according to the present invention comprises preparing a mixture of cereal flour or semolina and water, kneading the mixture to obtain a dough and injection moulding the dough.

A mixture may be prepared which has a water content of from 10 to 35%, for example.

The cereal may be Durum or hard wheat, for example.

The process may further comprise adding to the mixture wheat protein, soft wheat flour, egg material, sodium chloride and/or spices, for example.

Wheat protein, especially gliadin enriched wheat protein such as the product marketed under the name Lavor Pro by the company Midwest grain products, inc. Atchison, Kansas, USA, may be used in an amount of from about 1 to 3% by weight of the mixture, in order to reduce stickiness and improve firmness of the cooked pasta, for example.

Soft wheat flour may be added to the mixture in order to increase the elasticity of the pasta product, for example.

Egg material in the form of whole egg powder, egg white powder or liquid whole egg may be added to the mixture in order to increase the firmness of the pasta product, for example.

The steps of preparing the mixture and kneading the mixture to obtain a dough may be carried out with traditional bread or pasta making equipments such as baker's mixer and kneader, paddle mixer, mono- or twin screw kneader, or in the barrel of a traditional equipment for the injection moulding of plastics, for example.

The step of injection moulding may be carried out with an equipment comprising adequate injection means and moulding means.

Adequate injection means may comprise a piston and a nozzle, an extruder and a nozzle, a gear pump and a nozzle, or the barrel, screw and nozzle of a traditional equipment for the injection moulding of plastics, for example.

Adequate moulding means may comprise a mould in two parts engageable with one another and leaving a space between them corresponding to the shape of the product to be manufactured, the space being connnected to a conduit or dough inlet, and the two parts being held together by clamping means.

Preferably, the present invention is carried out with a traditional equipment for the injection moulding of plastics, in which the injection means comprise a screw enclosed in a jacketed barrel, the screw being rotatable and longitudinally translatable in the barrel, the barrel having a downstrean end in form of a nozzle, and in which the moulding means comprise a mould in two parts engageable with one another and held together by clamping means.

The dough to be injected is heated to a temperature of from 30 to 150°C, the injection means being therefore heatable and temperature controllable, for example.

The dough is injected into the mould under a pressure of from 200 to 5000 bar, for example.

The dough may be heated to a temperature of from 30 to 150°C during moulding, the moulding means being therefore heatable and temperature controllable, for example.

The injection moulded pasta product as released by opening the mould may have a water content of from about 8 to 32%, for example.

It may then be dried to a residual water content of from 4 to 13.5%, for example.

Surprisingly, it was possible in the present way to manufacture pasta products having attractive tridimensional shapes such as half hollow spheres or ellipsoids which could not be manufactured in the traditional way, namely by extruding raw dough through die openings, but which nevertheless had good organoleptical properties which could be compared with those of traditional pasta products.

The pasta product and the process according to the present invention are illustrated in the following Examples in which the percentages are by weight.

### Example 1

A pasta product having a tridimensional shape was manufactured with the aid of a 22M type injection moulding equipment manufactured by the company BOY AG in Neustad (Germany).

In a paddle mixer a mixture of water and Durum wheat semolina added with 200 ppm cystein was prepared which had a water content of 21%.

The mixture was introduced into the barrel of the injection moulding equipment where it was kneaded to obtain a dough and the dough was heated up to a temperature of 100°C. The dough was injected into a screw shaped mould under a pressure of 1400 bar. The temperature of the mould was held at 40°C.

The pasta product thus obtained had a well defined screw shape, a water content of 18.5%, a gelatinization degree of 72% and organoleptical properties comparable with those of regular pasta such as Durum wheat *macaroni,* for example.

### Examples 2 to 5

Pasta products having a tridimensional were manufactured with the aid of a 270M type injection moulding equipment manufactured by the company ARBURG AG in Lossburg (Germany).

In a paddle mixer different mixtures of water and Durum wheat semolina added with 200 ppm cystein were prepared which had water contents of 16% or 21%.

The mixtures were introduced into the barrel of the injection moulding equipment where they were kneaded to obtain different doughs and the doughs were heated up to temperatures of 60, 80 or 90°C. The doughs were injected into a plug shaped mould under pressures of 1400, 1800 or 2500 bar. The temperature of the mould was held at 30 or 40°C.

The pasta products thus obtained had a well defined plug shape, respective gelatinization degrees and water contents as indicated in recapitulatory Table 1 herafter and organoleptical properties comparable with those of regular pasta such as Durum wheat *lasagne* sheets, for example.

**Table 1**

| **Example No** | | **1** | **2** | **3** | **4** | **5** |
|---|---|---|---|---|---|---|
| Dough water content | (%) | 21 | 21 | 21 | 21 | 16 |
| Mould shape | | screw | plug | plug | plug | plug |
| Barrel temperature | (°C) | 100 | 80 | 60 | 60 | 90 |
| Injection pressure | bar | 1400 | 1400 | 1800 | 2500 | 2500 |
| Mould temperature | (°C) | 40 | 30 | 30 | 40 | 40 |
| Pasta water content | (%) | 18.5 | 19.7 | 19.8 | 17.8 | 14.5 |
| Pasta gelatinization degree | (%) | 72 | 69 | 69 | 84 | 100 |

### Example 6

A pasta product having a *lasagne* sheet shape was manufactured with the aid of a 270M type injection moulding equipment manufactured by the company ARBURG AG in Lossburg (Germany).

In a paddle mixer a mixture of water and Durum wheat semolina added with 200 ppm cystein was prepared which had a water content of 27%.

The mixture was introduced into the barrel of the injection moulding equipment where it was kneaded to obtain a dough and the dough was heated up to a temperature of 65-70°C. The dough was injected into a *lasagne* sheet shaped mould under a pressure of 1500 bar. The temperature of the mould was held at 35°C.

The pasta product thus obtained had a well defined *lasagne* sheet shape, a water content of 24%, a gelatinization degree of between 0 and 20% and organoleptical properties comparable with those of regular *lasagne* Durum wheat pasta sheets.

## Claims

1. A process for manufacturing a pasta product, which comprises preparing a mixture of cereal flour or semolina and water, kneading the mixture to obtain a dough and injection moulding the dough, in which the dough is heated to an injection temperature of from 30 to 150°C in the injection means, and in which the dough is injected into the moulding means under a pressure of from 200 to 5000 bar.

2. The process of claim 1, in which a mixture is prepared which has a water content of from 10 to 35%.

3. The process of claim 1, in which the cereal is Durum or hard wheat, rice and/or corn.

4. The process of claim 1, which further comprises adding to the mixture wheat protein, soft wheat flour, egg material, sodium chloride and/or spices.

5. The process of claim 1, in which the step of injection moulding is carried out with an equipment comprising injection means and moulding means.

6. The process of claim 1, in which the injection means comprise a screw enclosed in a jacketed barrel, the screw being rotatable and longitudinally translatable in the barrel and the barrel having a downstream end in form of a nozzle, and the moulding means comprise a mould in two parts engageable with one another and held together by clamping means.

7. The process of claim 5, in which the dough is heated to a moulding temperature of from 30 to 150°C in the moulding means.

8. The process of claim 5 in which, after having been released from the moulding means, the moulded pasta product is dried to a residual water content of from 4 to 13.5% and cooled.

## Patentansprüche

1. Verfahren zur Herstellung eines Teigwarenprodukts, das die Herstellung einer Mischung aus Getreidemehl oder -grieß und Wasser, das Kneten der Mischung unter Gewinnung eines Teigs und das Spritzgießen des Teigs umfaßt, wobei der Teig in der Einspritzeinrichtung auf eine Spritztemperatur von 30 bis 150°C erhitzt wird, und wobei der Teig in die Spritzgußform unter einem Druck von 200 bis 5000 bar eingespritzt wird.

2. Verfahren nach Anspruch 1, wobei eine Mischung hergestellt wird, die einen Wassergehalt von 10 bis 35 % aufweist.

3. Verfahren nach Anspruch 1, wobei das Getreide Durumoder Hartweizen, Reis und/oder Mais ist.

4. Verfahren nach Anspruch 1, das außerdem die Zugabe von Weizenprotein, Weichweizenmehl, Eimaterial, Natriumchlorid und/oder Gewürzen zu der Mischung umfaßt.

5. Verfahren nach Anspruch 1, wobei die Stufe des Spritzgießens mit einer Ausrüstung durchgeführt wird, die eine Einspritzeinrichtung und eine Spritzgußform umfaßt.

6. Verfahren nach Anspruch 1, wobei die Einspritzeinrichtung eine in einem ummantelten Zylinder angeordnete Schnecke umfaßt, wobei die Schnecke rotierbar und in Längsrichtung in dem Zylinder verschiebbar ist und der Zylinder ein stromab angeordnetes Ende in Form einer Düse aufweist, und wobei die Spritzgußform eine Form in zwei Teilen aufweist, die gegenseitig in Anlage gebracht werden können und mit einer Verklammerung zusammengehalten werden.

7. Verfahren nach Anspruch 5, wobei der Teig in der Spritzgußform auf eine Formtemperatur von 30 bis 150°C erhitzt wird.

8. Verfahren nach Anspruch 5, bei dem, nachdem es aus der Formeinrichtung ausgegeben ist, das geformte Teigwarenprodukt auf einen Restwassergehalt von 4 bis 13,5 % getrocknet und gekühlt wird.

## Revendications

1. Procédé pour la préparation d'un produit consistant en pâtes alimentaires, qui comprend la préparation d'un mélange d'une farine de céréale ou de semoule et d'eau, le malaxage du mélange pour obtenir une pâte et le moulage par injection de la pâte, dans lequel la pâte est chauffée à une température d'injection comprise dans l'intervalle de 30 à 150°C dans le moyen d'injection, et dans lequel la pâte est injectée dans un moyen de moulage sous une pression comprise dans l'intervalle de 200 à 5000 bars.

2. Procédé suivant la revendication 1, dans lequel est préparé un mélange qui a une teneur en eau de 10 à 35 %.

3. Procédé suivant la revendication 1, dans lequel la céréale est le blé Durum ou blé dur, le riz et/ou le maïs.

4. Procédé suivant la revendication 1, qui comprend en outre l'addition au mélange de protéine de blé, de farine de blé tendre, d'oeufs, de chlorure de sodium et/ou d'épices.

5. Procédé suivant la revendication 1, dans lequel l'étape de moulage par injection est mise en oeuvre avec un dispositif comprenant un moyen d'injection et un moyen de moulage.

6. Procédé suivant la revendication 1, dans lequel le moyen d'injection comprend une vis enfermée dans un cylindre chemisé, la vis étant apte à entrer en rotation et en translation longitudinale dans le cylindre et le cylindre ayant une extrémité en aval sous forme d'une buse, et le moyen de moulage comprend un moule en deux parties pouvant être mises en prise l'une avec l'autre et maintenues ensemble par un moyen de serrage.

7. Procédé suivant la revendication 5, dans lequel la pâte est chauffée à une température de moulage comprise dans l'intervalle de 30 à 150°C dans le moyen de moulage.

8. Procédé suivant la revendication 5, dans lequel, après avoir été libéré du moyen de moulage, le produit consistant en pâtes alimentaires moulé est séché jusqu'à une teneur en eau résiduelle de 4 à 13,5 % et est refroidi.
